**Europäisches Patentamt**

(19) **European Patent Office**

**Office européen des brevets**

(11) Numéro de publication: **0 018 343**
**B1**

(12) **FASCICULE DE BREVET EUROPEEN**

(45) Date de publication du fascicule du brevet:
**11.01.84**

(21) Numéro de dépôt: **80870020.7**

(22) Date de dépôt: **27.03.80**

(51) Int. Cl.³: **H 02 M 3/155,** G 05 F 1/64,
H 02 P 13/32

(54) Hacheur de courant pour la régulation de l'alimentation d'une charge.

(30) Priorité: **09.04.79 BE 194484**

(43) Date de publication de la demande:
**29.10.80 Bulletin 80/22**

(45) Mention de la délivrance du brevet:
**11.01.84 Bulletin 84/2**

(84) Etats contractants désignés:
**DE FR GB IT NL**

(56) Documents cités:
**BE - A - 858 684**
**FR - A - 2 343 358**
**FR - A - 2 345 762**
**FR - A - 2 349 995**
**US - A - 4 061 931**

(73) Titulaire: **ORGANISATION EUROPEENNE DE RECHERCHES SPATIALES, rue Mario Nikis, 8-10, F-75738 Paris Cedex 15 (FR)**

(72) Inventeur: **Capel, Antoine, 241, Résidence des coteaux de St Agnes, Ramonville 31 (FR)**

(74) Mandataire: **Vanderperre, Robert et al, Bureau VANDER HAEGHEN 63 Avenue de la Toison d'Or, B-1060 Bruxelles (BE)**

BUNDESDRUCKEREI BERLIN

Hâcheur de courant pour la régulation · de l'alimentation d'une charge

La présente invention concerne un dispositif synchronisé pour commander un ensemble de régulation à commutation.

La régulation de tension ou de courant par un processus échantillonné a évolué durant des dernières années par la mise au point de modulateurs améliorant les performances statiques et le comportement dynamique des régulateurs. Des systèmes ont été décrits qui font usage de modulateurs magnétiques adaptés à des régulateurs bien déterminés (régulateur abaisseur ou abaisseur-élévateur de tension). Ces systèmes se caractérisent par un mode de fonctionnement discontinu et ne permettent de réguler que des puissances limitées. De plus, ces systèmes sont relativement complexes et encombrants.

Une amélioration très appréciable a déjà été apportée par un dispositif de régulation à circuit de commande travaillant en ondulation de courant (BE-A-858 684) dans lequel le courant est mesuré et comparé dans un dispositif comparateur avec un signal de référence de courant produit par un générateur commandé par un signal de contrôle représentant l'écart entre la valeur réelle instantanée du paramètre de fonctionnement à contrôler et une valeur de référence. Dans ce dispositif les courants minimum et maximum sont contrôlés par une tension de contrôle, la fréquence d'ondulation du courant restant libre. Ce dispositif de régulation allie les avantages statiques et dynamiques obtenus jusqu'alors par des modes de fonctionnement inconciliables (conduction continue et conduction discontinue) des régula- teuers classiques. Ce type de régulateur est actuellement limité en puissance et opère à une fréquence libre indépendante des paramètres du circuit.

On connaît un dispositif de régulation à découpage, défini dans le préambule de la revendication 1, dont le fonctionnement est synchronisé (FR-A-2 345 762). Dans ce dispositif le générateur d'impulsions de synchronisation est inclus dans la boucle de régulation et la fréquence du signal de synchronisation doit varier afin de maintenir une régulation stable. Ce dispositif n'est pas prévu pour utiliser un générateur d'impulsions de synchronisation externe délivrant des impulsions de fréquence fixe, de sorte qu'il n'est guère possible de faire fonctionner plusieurs dispositifs semblables par simple mise en parallèle.

Le problème que vise à résoudre l'invention est de réaliser un dispositif de commande de régulation qui rend possible la réalisation d'unités modulaires ayant des puissances de l'ordre du kilowatt par module tout en ayant les performances dynamiques d'unités de plus faible puissance.

L'invention a pour objet un dispositif pour la régulation de l'alimentation d'une charge par l'intermédiaire d'un contrôle et d'un réglage du courant électrique avec un contrôle rigoureux de la valeur de crête de ce courant.

Le dispositif suivant l'invention comprend un circuit de commande synchronisé par des impulsions d'horloge extérieures pour produire un signal de commande destiné à attaquer un commutateur de régulation. Le circuit de commande comprend un premier transistor recevant sur sa base les impulsions de synchronisation d'une source extérieure et ayant son collecteur connecté pour envoyer chaque impulsion de synchronisation sur la base du transistor de commutation afin de polariser celui-ci à l'état conducteur, un deuxième transistor recevant sur sa base une tension de commande et ayant son collecteur connecté au collecteur du premier transistor afin d'envoyer un signal de commande sur la base du transistor de commutation de manière à maintenir celui-ci conducteur après la disparition de chaque impulsion de synchronisation, et un troisième transistor ayant sa base connectée au collecteur du transistor de commutation et son sollecteur connecté à la base du premier transistor de manière à bloquer le deuxième transistor en réponse à un signal indiquant que le transistor de commutation est redevenu non conducteur.

Les avantages combinés de ce dispositif suivant l'invention sont principalement:

a)  le contrôle du courant de crête protège l'installation et les composants contre les surintensités et permet de réaliser des unités de puissance plus importante présentant les performances dynamiques d'unités de plus faible puissance,

b)  le comportement dynamique réduit l'ordre de la fonction de transfert du système de filtrage, ramenant cette fonction de transfert à une fonction du premier ordre, ce qui résulte en un déphasage maximum de 90° comparé au déphasage maximum de 180° dans les régulateurs classiques travaillant en mode continu,

c)  le comportement dynamique résulte en une excellente stabilité et une exellente réponse dynamique globale aux variations de la tension d'entrée et de la charge comme le montrent les observations à l'oscilloscope,

d)  possibilité de réalisations strictement modulaires par mise en parallèle simple sans augmentation de la complexité du système, avec synchronisation de chaque module à des instants déterminés,

e)  possibilité de réaliser le dispositif en technologie couche épaisse, ce qui est d'une importance essentielle car cette possibilité autorise une approche systématique pour la normalisation des régulateurs pour un grand nombre d'applications;

approche est rendue possible par l'augmentation du rendement en puissance obtenu à l'aide d'un agencement réalisé en composants actifs et accélérant le blocage du commutateur principal,

f) possibilité de réaliser un module de commande en technologie couche épaisse capable de piloter des cellules de régulation à commutation.

Le principe du dispositif selon l'invention peut être appliqué à la régulation de paramètres analogiques du type élévateur (boost), du type abaisseur (buck) ou du type abaisseur-élévateur (buck-boost) ainsi qu'à la protection de circuits de distribution d'électricité exigeant un contrôle du type modulation d'impulsions en durée.

Un autre objet de l'invention est un module de commande standard à bas niveau destiné à commander de façon synchronisée des cellules de régulation à commutation classiques.

L'invention est exposée de façon plus détaillée dans ce qui suit avec référence aux dessins ci-joints sur lesquels:

la figure 1 est un schéma d'un régulateur de tension incorporant le dispositif selon l'invention;

la figure 2 montre les broches de raccordement extérieures d'un module de commande standard suivant l'invention;

la figure 3 est un schéma d'un exemple de circuit pour un module standard selon la figure 2.

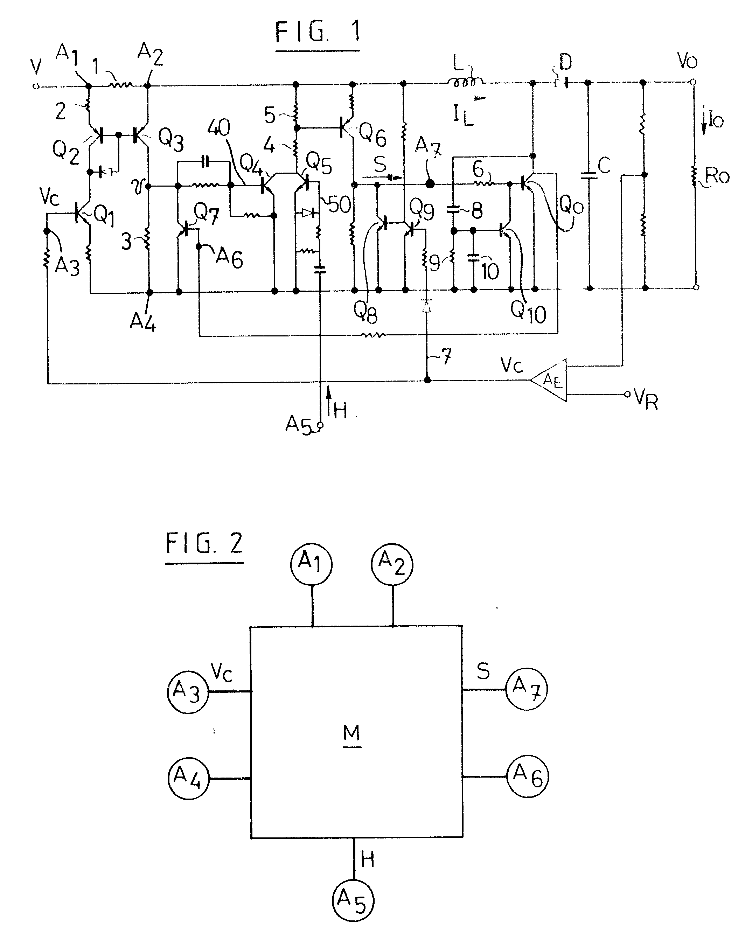

Le principe et le mécanisme de régulation du dispositif selon l'invention sont expliqués dans l'application à la régulation d'une tension électrique. Le circuit montré à la figure 1 est le circuit d'un régulateur élévateur de tension, qui est le type de régulateur le plus utilisé et dont le fonctionnement est aussi le plus critique. Le paramètre à régler est ici la tension Vo appliquée à une charge représentée par la résistance $R_0$ et la capacité C. La régulation est effectuée à l'intervention d'une cellule de régulation classique connectée aux bornes de la charge et comprenant un commutateur commandé $Q_0$, une bobine d'induction L pour le stockage d'énergie et une diode D. Ces éléments ainsi que l'amplificateur d'erreur $A_E$ sont des éléments classiques d'un régulateur de tension à commutation. L'amplificateur d'erreur $A_E$ est connecté pour produire un signal de contrôle Vc représentant l'écart entre la tension de sortie Vo et une tension de référence $V_R$.

L'invention porte en particulier sur un modulateur de commande synchronisé, connecté pour produire le signal de commande S attaquant la base du transistor $Q_0$ afin d'en commander la commutation à une fréquence fixe.

Le but recherché dans le dispositif suivant l'invention est de contrôler l'application du signal de commande S en fonction du courant traversant la bobine d'induction L de telle manière que la quantité d'électricité délivrée par le régulateur dans une période de temps donnée soit dépendante du signal de contrôle Vc tout en limitant le courant $I_o$ dans la charge à une valeur de crête $I_M$ prédéterminée. Le courant dans la bobine d'induction L est mesuré par la chute de tension qu'il produit sur la résistance 1. C'est cette chute de tension qui est contrôlée par comparaison avec une tension de référence produite sur la résistance 2 par la conduction du transistor $Q_1$ dont la base est attaquée par le signal de contrôle Vc. La tension de référence est donc directement proportionnelle au signal de contrôle Vc. Les transistors $Q_2$ et $Q_3$ constituent un dispositif de comparaison dont la sortie, le collecteur du transistor $Q_3$, délivre un courant dont la variation est liée à la différence entre les chutes de tension sur les résistances 1 et 2. Lorsque ces deux chutes de tension sont égales, le transistor $Q_3$ devient pratiquement non conducteur et la tension $v$ sur la résistance 3 devient égale à zéro. La tension $v$ est la tension de commande qui régit le mécanisme de commutation du transistor $Q_0$, comme décrit plus loin.

Les transistors $Q_4$ et $Q_5$ constituent un dispositif de commutation ayant pour fonction de transmettre, pour être appliqué à la base du transistor $Q_0$, le signal de commande approprié S. Le dispositif de commutation $Q_4-Q_5$ a deux entrées: la base 40 du transistor $Q_4$ qui reçoit la tension de commande $v$ et la base 50 du transistor $Q_5$ qui reçoit des impulsions de synchronisation H d'une horloge extérieure. Le fonctionnement du modulateur est synchronisé par les impulsions d'horloge H. Pir décrire ce fonctionnement, on supposera que l'on se trouve au moment où le transistor $Q_0$ est rendu conducteur par une impulsion H appliquée à la base du transistor $Q_5$. La tension collecteur de $Q_5$ fait alors apparaître un signal de commande S sur la base de $Q_6$ à travers le circuit comprenant la résistance 4, le transistor $Q_6$ et la résistance 6. A ce moment, la tension collecteur de $Q_0$ est zéro et le transistor $Q_7$, connecté en parallèle sur la résistance 3, est bloqué. Lorsqu'il se produit une tension de commande $v$, celle-ci rend le transistor $Q_4$ conducteur, le collecteur de celui-ci maintient un signal de commande S sur la base du transistor $Q_0$ et celui-ci se trouve ainsi maintenu conducteur après l'application de l'impulsion H.

Pendant que le transistor $Q_0$ est conducteur, le courant $I_L$ dans la bobine d'induction croît. Ce courant $I_L$ se trouve mesuré sur la résistance 1 comme il a été dit plus haut, et sa variation produit une variation de conduction du transistor $Q_3$, de qui fait diminuer la valeur de la tension de commande $v$ si l'on suppose que le signal de contrôle Vc est constant. La conduction de $Q_0$ subsiste jusqu'à ce que la tension de commande $v$ soit devenue égale à zéro. Dès que $v=0$, en effet, le transistor $Q_4$ se trouve bloqué, ainsi que le transistor $Q_6$, et la base de $Q_0$ ne reçoit plus de courant. Le transistor $Q_0$ se trouve alors bloqué jusqu'à l'apparition d'une nouvelle impulsion H. La présence du transistor $Q_7$ a pour effet de

découpler le transistor $Q_0$ de la tension de commande $v$ en annulant cette tension pendant tout le restant du cycle. En effet, lorsque $Q_0$ ne reçoit plus de courant dans sa base, la tension sur son collecteur est à l'état haut et rend le transistor $Q_7$ conducteur. Celui-ci court-circuite donc la résistance 3 et met la base de $Q_4$ à la masse jusqu'à l'apparition de l'impulsion d'horloge H suivante, ce qui fait redémarrer le processus de régulation.

Sur le schéma de la figure 1, on voit qu'un courant n'est injecté dans la base de $Q_0$ que si le transistor $Q_8$ n'est pas conducteur, c'est-à-dire en fait si le transistor $Q_9$ est maintenu conducteur par le signal de contrôle Vc qui se trouve amené à sa base par le circuit 7. Ce sera le cas pour autant que le signal de contrôle Vc soit supérieur à un seuil déterminé. Dès que ce seuil est atteint, ce qui correspond à l'apparition d'une surtension, le transistor $Q_9$ se trouve bloqué et $Q_8$ est saturé, ce qui met la base de $Q_0$ à la masse.

Un rendement élevé est obtenu au moyen d'un circuit comprenant la résistance 8, la capacité 9 et le transistor $Q_{10}$. Ce circuit différentie le signal présent sur le collecteur de $Q_0$ lors de son passage à l'état haut, c'est-à-dire lors du blocage du transistor $Q_0$, et le transistor $Q_{10}$ réalise alors un court-circuit pendant le phénomène transitoire, ce qui a pour effet d'accélérer le blocage du transistor $Q_0$ et de réduire les pertes.

La régulation de la tension de sortie Vo est ainsi réalisée par un contrôle et un réglage de courant, avec un contrôle rigoureux du courant de crête. Le réglage du courant, qui est lié à la valeur du signal de contrôle Vc, assure la délivrance du courant requis par la charge à la tension requise.

Le contrôle rigoureux du courant de crête a un impact important sur la fiabilité et les performances des unités de régulation, la marge de sécurité de fonctionnement des composants pouvant ainsi être ajustée et les performances maximales être utilisées. Cela résulte en un avantage appréciable du point de vue puissance pouvant être gérée en pratique: c'est ainsi qu'il est possible de concevoir des modules de 3 kW en utilisant un transistor $Q_0$ de 50 A travaillant sous 100 V CC. A titre de comparaison, on peut indiquer que la limite de puissance actuelle par module de régulation est de 300 W.

La mise en parallèle de modules de même type est grandement facilitée avec l'invention car le signal de contrôle Vc permet de contrôler directement la répartition de puissance par module tandis que la commutation est déterminée par un agencement de leurs horloges respectives. Cette dernière particularité joue un rôle essentiel dans le dimensionnement du circuit de filtrage.

De plus, la caractéristique de sortie du régulateur selon l'invention peut être adaptée par le type de cellule de puissance associée. En limitant l'excursion du signal de contrôle analogique Vc, à l'aide d'une diode de Zener par exemple, la caractéristique à courant maximum limité peut être convertie en une caractéristique de type »foldback«.

Il est évident pour l'homme de l'art que le dispositif de régulation suivant l'invention peut être réalisé dans des modes d'exécution variant par certains détails du mode d'exécution décrit à titre d'exemple dans ce qui précède et qu'il s'adapte à d'autres types de régulateurs. De plus, le dispositif selon l'invention peut servir à piloter des étages de puissance d'unités exigeant un contrôle du type modulation d'impulsions en durée.

Le principe du dispositif selon l'invention permet avantageusement de réaliser en technologie couche épaisse un module standard de modulateur électrique bas niveau pouvant servir à piloter de façon synchronisée des cellules de régulation à commutateur commandé. La figure 2 montre les broches de raccordement extérieures d'un tel module standard M. Les broches sont notées $A_1$ à $A_7$ et correspondent aux points de connexion de mêmes désignations sur la figure 1. Leurs utilisations sont les suivantes:

$A_1$—$A_2$   broches de connexion du dispositif de mesure de courant
$A_3$   application du signal de contrôle Vc
$A_4$   connexion de masse
$A_5$   application des impulsions d'horloge de synchronisation
$A_6$   application du signal de verrouillage
$A_7$   sortie du signal de commande S pour cellule de régulation.

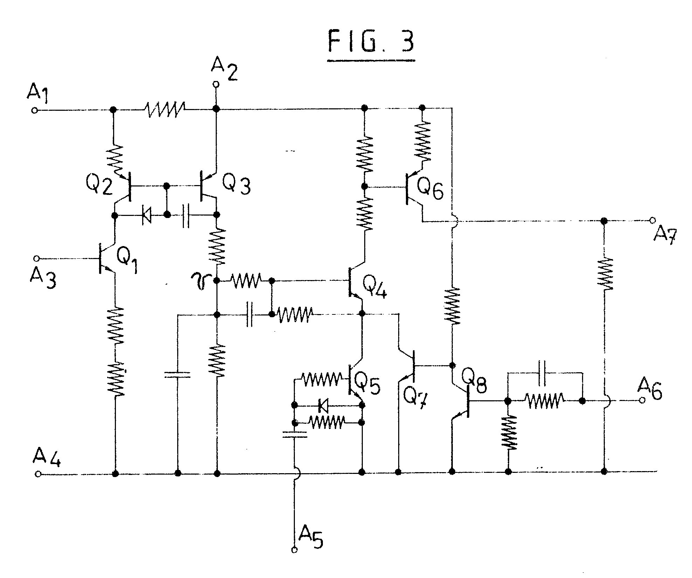

La figure 3 montre un schéma de circuit convenant particulièrement à la réalisation d'un module standard en couche épaisse. Dans ce circuit on retrouve les éléments fonctionnels du circuit de modulateur de la figure 1, désignés de façon identique. En particulier, on distingue le générateur de signal de référence de courant $Q_1$, le montage de comparaison de courants $Q_2$—$Q_3$, le dispositif de commutation $Q_4$—$Q_5$ attaqué par les impulsions d'horloge H et par la tension de commande $v$ liée à la variation du courant ainsi que l'élément de verrouillage $Q_7$. Le fonctionnement de ce circuit est en tous points semblable à celui qui est décrit plus haut.

**Revendications**

1. Hâcheur de courant pour la régulation de l'alimentation d'une charge à l'aide d'une cellule de régulation comportant un transistor de commutation ($Q_0$) qui permet la charge d'un élément inductif (L) lorsqu'il est conducteur, ce transistor de commutation commutant en régime synchronisé, un dispositif de mesure de courant (1) connecté pour mesurer le courant électrique traversant l'élément inductif et pour engendrer un signal de mesure représentant ledit courant, un générateur de signal de référence de courant ($Q_1$) commandé par un signal de contrôle (Vc) et

un dispositif comparateur ($Q_2$, $Q_3$) connecté pour comparer le signal de mesure de courant avec le signal de référence de courant dudit générateur ($Q_1$) et produire une tension de commande ($v$) liée à l'écart de courant mesuré, caractérisé par un circuit de commande connecté entre la sortie du dispositif comparateur ($Q_2$, $Q_3$) et la base du transistor de commutation ($Q_0$), ledit circuit de commande comprenant un premier transistor ($Q_5$) recevant sur sa base les impulsions de synchronisation (H) d'une source extérieure et ayant son collecteur connecté pour envoyer chaque impulsion de synchronisation (H) sur la base du transistor de commutation ($Q_0$) afin de polariser celui-ci à l'état conducteur, un deuxième transistor ($Q_4$) recevant sue sa base la tension de commande ($v$) du dispositif comparateur ($Q_2$, $Q_3$) et ayant son collecteur connecté au collecteur du premier transistor ($Q_5$) afin d'envoyer un signal de commande (S) sur la base du transistor de commutation ($Q_0$) de manière à maintenir celui-ci conducteur après la disparition de chaque impulsion de synchronisation (H), et un troisième transistor ($Q_7$) ayant sa base connectée au collecteur du transistor de commutation ($Q_0$) et son collecteur connecté à la base du premier transistor ($Q_4$) de manière à bloquer le deuxième transistor ($Q_4$) en réponse à un signal indiquant que le transistor de commutation ($Q_0$) est redevenu non conducteur.

2. Dispositif selon la revendication 1, caractérisé en ce qu'il comprend en outre deux éléments de commutation ($Q_8$, $Q_9$) connectés pour bloquer le transistor de commutation ($Q_0$) lorsque le signal de contrôle (Vc) devient inférieur à un seuil prédéterminé.

3. Dispositif selon la revendication 1, caractérisé par un circuit (8, 9, $Q_{10}$) connecté pour forcer le blocage du transistor de commutation ($Q_0$) en réponse à un signal indiquant que celui-ci devient non conducteur.

4. Dispositif de régulation selon l'une quelconque des revendications 1 et 2 pour commander de façon synchronisée une cellule de régulation à commutateur commandé, caractérisé en ce qu'il est constitué d'un module de commande bas niveau, réalisé en technologie couche épaisse et ayant des broches ($A_1$—$A_2$) pour la connexion d'un dispositif de mesure de courant, une broche ($A_3$) pour l'application d'un signal de commande, une broche ($A_5$) pour l'application d'un signal de synchronisation, une broche ($A_6$) pour l'application d'un signal de blocage et une broche ($A_7$) pour la sortie de commande de la cellule de régulation.

**Patentansprüche**

1. Stromzerhacker zur Regelung der Zuführung einer Ladung mittels einer Regelungszelle, mit einem Schalttransistor ($Q_0$), welcher in seinem leitendem Zustand die Ladung eines induktiven Elements (L) gestattet, wobei dieser Schalttransistor gemäß einem synchronisierten Verlauf schaltet, mit einer angeschlossenen Strommeßvorrichtung (1) zur Messung des das induktive Element durchfließenden Stroms und zur Erzeugung eines diesen Strom darstellenden Meßsignals, mit einem Bezugsstromsignalgenerator ($Q_1$), welcher durch ein Steuersignal (Vc) gesteuert wird und mit einer Vergleichsvorrichtung ($Q_2$, $Q_3$), welche so geschaltet ist, um das Strommeßsignal mit dem Bezugsstromsignal des Bezugsstromsignalgenerators ($Q_1$) zu vergleichen und eine Steuerspannung ($v$) zu erzeugen, die an die Abweichung des gemessenen Stroms gekoppelt ist, gekennzeichnet durch eine Steuerschaltung, die zwischen dem Ausgang der Vergleichsvorrichtung ($Q_2$, $Q_3$) und der Basis des Schalttransistors ($Q_0$) angeschlossen ist, wobei die Steuerschaltung einen ersten Transistor ($Q_5$) aufweist, der an seiner Basis Synchronisierungsimpulse (H) einer externen Quelle erhält und welcher mit seinem Kollektor derart angeschlossen ist, daß er jeden Synchronisierungsimpuls (H) an die Basis des Schalttransistors ($Q_0$) abgibt, um diesen in einen Leitungszustand zu polarisieren, einen zweiten Transistor ($Q_4$), welcher an seiner Basis die Steuerspannung ($v$) der Vergleichsvorrichtung ($Q_2$, $Q_3$) erhält und dessen Kollektor mit dem Kollektor des ersten Transistors ($Q_5$) verbunden ist, damit an der Basis des Schalttransistors ($Q_0$) ein Befehlssignal (S) erzeugt wird, um den Schalttransistor nach Verschwinden eines jeden Synchronisierungsimpulses (H) leitend zu halten und einen dritten Transistor ($Q_7$), dessen Basis mit dem Kollektor des Schalttransistors ($Q_0$) verbunden ist und dessen Kollektor an die Basis des ersten Transistors ($Q_4$) derart angeschlossen ist, um den zweiten Transistor ($Q_4$) abhängig von einem Signal zu sperren, welches anzeigt, daß der Schalttransistor ($Q_0$) erneut nicht-leitend geworden ist.

2. Vorrichtung nach Anspruch 1, gekennzeichnet ferner durch zwei Schaltelemente ($Q_8$, $Q_9$), die derart angeschlossen sind, um den Schalttransistor ($Q_0$) zu sperren, wenn das Steuersignal (Vc) einen vorbestimmten Wert unterschreitet.

3. Vorrichtung nach Anspruch 1, gekennzeichnet durch eine Schaltung (8, 9, $Q_{10}$), welche so angeschlossen ist, um die Sperrung des Schalttransistors ($Q_0$), abhängig von einem Signal zu erzwingen, welches anzeigt, daß der Schalttransistor nicht-leitend wird.

4. Regelungsvorrichtung nach einem der Ansprüche 1 und 2 zur synchronisierten Steuerung einer Regelungszelle mit gesteuertem Schalter, dadurch gekennzeichnet, daß sie aus einem Steuermodul mit niedrigem Pegel besteht, die in Dickschichttechnologie ausgeführt ist und Stifte ($A_1$—$A_2$) zum Anschluß einer Strommeßvorrichtung aufweist, sowie einen Stift ($A_3$) zur Zuführung eines Befehlssignals, einen Stift ($A_5$) zur Zuführung eines Synchronisierungssignals, einen Stift ($A_6$) zur Zuführung eines Sperrsignals und einen Stift ($A_7$) für den Befehlsausgang der Regelzelle.

## Claims

1. A current chopper for regulating the feeding of a load by means of a regulation unit including a switching transistor ($Q_0$) which enables an inductive element (L) to be charged when said element is conducting, said switching transistor operating in synchronized switching mode, a current sensor device (1) connected to sense the electric current through the inductive element and to generate a sensing signal representing said current, a current reference signal generator ($Q_1$) connected to be responsive to a command signal (Vc) and a comparator device ($Q_2$, $Q_3$) connected to compare the current sensing signal to the current reference signal from said generator ($Q_1$) for producing a control voltage (v) related to sensed current difference, characterized by a control circuit connected between the output of the comparator device ($Q_2$, $Q_3$) and the base of the switching transistor ($Q_0$), said control circuit comprising a first transistor ($Q_5$) having its base connected to accept the synchronizing pulses (H) from an external source and having its collector connected to transfer each synchronizing pulse (H) to the base of the switching transistor ($Q_0$) thereby to force same in a conducting state, a second transistor ($Q_4$) having its base connected to accept the control voltage (v) from the comparator device ($Q_2$, $Q_3$) and having its collector connected to the collector of said first transistor ($Q_5$) to transfer a drive signal (S) to the base of said switching transistor ($Q_0$) thereby to hold same in its conducting state after each synchronizing pulse (H) having disappeared, and a third transistor ($Q_7$) having its base connected to the collector of the switching transistor ($Q_0$) and having its collector connected to the base of said first transistor ($Q_5$) to hold the second transistor ($Q_4$) in a blocking state in response to a signal indicating that the switching transistor ($Q_0$) is reset in its non-conducting state.

2. An apparatus according to claim 1, characterized by further comprising two switching elements ($Q_8$, $Q_9$) connected to lock the switching transistor ($Q_0$) in its non-conducting state in response to the command signal (Vc) being lower than a predetermined threshold.

3. An apparatus according to claim 1, characterized by a circuit (8, 9, $Q_{10}$) connected to force the switching transistor ($Q_0$) in its non-conducting state in response to a signal indicating that it is switching in its non-conducting state.

4. A regulating apparatus according to any of claims 1 and 2 for synchronously driving a regulation unit including a controlled switch, characterized by being comprised of a thick-layer low-level control module having terminals ($A_1 - A_2$) for the connection of a current sensor device, a terminal ($A_3$) for accepting a command signal, a terminal ($A_5$) for accepting a synchronizing signal, a terminal ($A_6$) for accepting a blocking signal and a terminal ($A_7$) for outputting the drive signal for the regulation unit.

FIG. 1

FIG. 2

FIG. 3